# EUROPEAN PATENT SPECIFICATION

(11) **EP 3 312 535 B1**
(45) Date of publication and mention of the grant of the patent: **01.05.2019**
(21) Application number: 17193546.3
(22) Date of filing: 27.09.2017
(51) Int. Cl.: F27B 5/04, F27B 5/06, F27B 5/08, F27D 1/00, F27D 1/14

(54) **VACUUM HEAT INSULATION STRUCTURE**
VAKUUMWÄRMEISOLIERUNGSSTRUKTUR
STRUCTURE D'ISOLATION THERMIQUE SOUS VIDE

(30) Priority: 21.10.2016 JP 2016206864
(43) Date of publication of application: 25.04.2018
(73) Proprietor: TOYOTA JIDOSHA KABUSHIKI KAISHA, Toyota-shi, Aichi-ken, 471-8571 (JP)
(72) Inventor: TAKAHASHI, Takaaki, Aichi-ken, 471-8571 (JP)
(74) Representative: J A Kemp

(56) References cited:
- DE-A1- 1 758 992
- DE-U1- 9 301 293

## Description

### BACKGROUND OF THE INVENTION

### 1. Field of the Invention

The present invention relates to a vacuum heat insulation structure.

### 2. Description of Related Art

A vacuum heat insulation structure in which an inner wall is covered by an outer wall and a vacuum space is formed between the inner wall and the outer wall is known. In such a vacuum heat insulation structure, for example, when the inner wall has a high temperature, in the vacuum space, while heat conduction from the inner wall to the outer wall by heat transfer can be suppressed, heat conduction from the inner wall to the outer wall by radiation cannot be suppressed. Japanese Patent Application Publication No. 2006-081608 (JP 2006-081608 A) discloses a vacuum heat insulation structure in which a multi-layer heat insulating material of a metal foil having an oxide layer formed on at least one surface thereof is disposed in a vacuum space between an inner cylinder and an outer cylinder. Accordingly, even when the inner wall has a high temperature, heat conduction from the inner wall to the outer wall by radiation can be suppressed.

### SUMMARY OF THE INVENTION

However, in the vacuum heat insulation structure disclosed in JP 2006-081608 A, the multi-layer heat insulating material disposed in the vacuum space may come in contact with both of the inner wall and the outer wall, and in this case, sufficient thermal insulation performance may not be obtained because of thermal conduction from the inner wall that has a high temperature to the outer wall via the multi-layer heat insulating material.

The present invention provides a vacuum heat insulation structure capable of obtaining sufficient thermal insulation performance even when an inner wall has a high temperature.

The present invention provides a vacuum heat insulation structure as specified in the claims. For this reason, even when the inner wall that covers the heating space has a high temperature, heat of the inner wall is not transferred to the outer wall via the reflective film. Accordingly, the vacuum heat insulation structure obtains sufficient thermal insulation performance even when the inner wall has a high temperature.

Further, the fixing tool is a magnet pair including a first magnet disposed on an outer surface of the outer wall and a second magnet disposed in the vacuum space and facing the first magnet with the outer wall sandwiched between the first magnet and the second magnet, and the reflective film is sandwiched between the first magnet and the second magnet and fixed to the inner surface of the outer wall. The fixing tool may be formed in this way, and the reflective film can be fixed to the inner surface of the outer wall so as not to come in contact with the outer surface of the inner wall.

Further, the inner wall and the outer wall may be formed in a cylindrical shape, and the fixing tool may be a C-ring configured to bias the reflective film to the inner surface of the outer wall. Since the fixing tool is configured in this way, the reflective film can be fixed to the inner surface of the outer wall so as not to come in contact with the outer surface of the inner wall.

The fixing tool may be an O-ring configured by connecting end portions of a pair of semicircular arc-shaped rings to each other using springs.

The fixing tool may have a belt-shaped strap rounded in an O shape, and an adjustment mechanism attached to an inner circumferential side of one end of the strap and configured to adjust an effective length of the strap.

A material of the outer wall may be a magnetic metal, the fixing tool may be the first magnet disposed on the outer surface of the outer wall, and the reflective film may be fixed to the inner surface of the outer wall as the first magnet attracts the outer wall.

The reflective film may include aluminum.

The reflective film may be a multi-layered film in which a metal thin film and a heat resistant thin film are alternately laminated in a cylindrical shape.

The metal thin film may include aluminum, and the heat resistant thin film may be a ceramic thin film.

According to the present invention, sufficient thermal insulation performance is obtained even when the inner wall has a high temperature.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view for describing a schematic configuration of a curing oven to which a vacuum heat insulation structure according to an embodiment is applied;
FIG. 2 is a schematic view for describing a configuration of the vacuum heat insulation structure according to the embodiment;
FIG. 3 is a cross-sectional view taken along line III-III of FIG. 2;
FIG. 4 is a schematic view showing a state in which a fixing tool according to Modified Example 1 is disposed in the vacuum heat insulation structure according to the embodiment;
FIG. 5 is a schematic view showing a state in which a fixing tool according to Modified Example 2 is disposed in the vacuum heat insulation structure according to the embodiment; and
FIG. 6 is a schematic view showing a state in which a fixing tool according to Modified Example 3 is disposed in the vacuum heat insulation structure according to the embodiment.

### DETAILED DESCRIPTION OF EMBODIMENTS

### Embodiment 1

Hereinafter, Embodiment 1 of the present invention will be described with reference to the accompanying drawings.

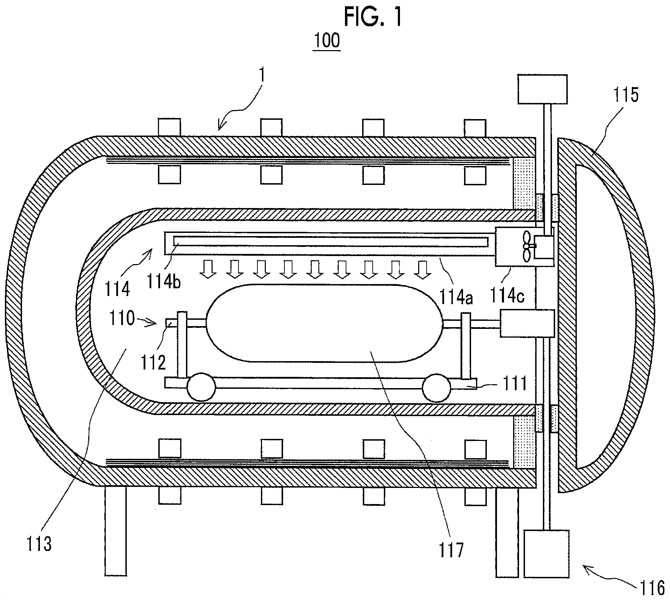

First, referring to FIG. 1, a configuration of a curing oven 100 serving as a heating furnace to which a vacuum heat insulation structure 1 according to an embodiment is applied will be described. The curing oven 100 is used to manufacture a high pressure hydrogen tank serving as a fuel gas supply source in a fuel cell system mounted in a fuel-cell vehicle. In manufacture of the high pressure hydrogen tank, reinforced fibers impregnated with a thermosetting resin such as an epoxy resin or the like are wound on an outer circumference of a liner formed of a nylon-based resin or the like, and the thermosetting resin is heated in the curing oven 100 and thermally cured to form a fiber-reinforced resin layer.

FIG. 1 is a schematic view for describing a schematic configuration of the curing oven 100 to which the vacuum heat insulation structure 1 according to the embodiment is applied. As shown in FIG. 1, the curing oven 100 includes the vacuum heat insulation structure 1 having a heating space 113 therein, a tank conveyance carriage 110, a tank rotating mechanism 116, a hot air supply mechanism 114 and a vacuum heat insulating lid 115.

The tank conveyance carriage 110 has a frame 111 to which wheels are attached and a tank journal shaft 112 rotatably supported by the frame 111. The tank rotating mechanism 116 is connected to the tank journal shaft 112 to rotationally drive the tank journal shaft 112.

The hot air supply mechanism 114 has an elongated duct 114a having a blowout port, a radiation heater 114b disposed in the duct 114a, and a blower fan 114c such as a sirocco fan or the like configured to blow air into the duct 114a. The hot air supply mechanism 114 is disposed such that a longitudinal direction of the duct 114a of the hot air supply mechanism 114 is parallel to an axial direction of the tank journal shaft 112 in the tank conveyance carriage 110 disposed in the vacuum heat insulation structure 1. In addition, a blowout port directed downward is formed in the duct 114a in the axial direction of the tank journal shaft 112. The vacuum heat insulating lid 115 is provided to cover an opening portion of the vacuum heat insulation structure 1.

In a heat curing process using the curing oven 100, before loading of an intermediate product tank 117 into the curing oven 100, the intermediate product tank 117 is mounted on the tank conveyance carriage 110. Here, the intermediate product tank 117 is a tank in a state in which reinforced fibers are wound on an outer circumference of a liner. The tank journal shaft 112 is inserted into mouthpieces of both ends of the intermediate product tank 117, and supported by the frame 111 in a state in which the shaft protrudes from both ends of the tank. After the intermediate product tank 117 is supported by the tank conveyance carriage 110, the tank conveyance carriage 110 is loaded into the vacuum heat insulation structure 1, and a heat curing process of the intermediate product tank 117 in the curing oven 100 is started.

When the blower fan 114c is driven while the radiation heater 114b generates heat, hot air is blown out of a blowout port of the duct 114a to the intermediate product tank 117, and the intermediate product tank 117 is uniformly heated in the tank axial direction. In addition, in the heat curing process of the intermediate product tank 117, the intermediate product tank 117 is rotated by the tank rotating mechanism 116, along with the tank journal shaft 112, at a constant speed, and the rotation is maintained throughout the heat curing process.

In the curing oven 100, simultaneously with rotation of the intermediate product tank 117, or during rotation at a constant speed (for example, 120 rpm), outputs of the radiation heater 114b and the blower fan 114c are controlled such that a temperature in the furnace is maintained at a temperature (for example, 150 °C which is a curing temperature of an epoxy resin) appropriate for thermosetting of a thermosetting resin (in the first embodiment, an epoxy resin) contained in the reinforced fibers wound on the outer circumference of the liner. Accordingly, in the intermediate product tank 117, curing of the thermosetting resin contained in the reinforced fibers wound on the outer circumference of the liner starts.

The intermediate product tank 117 is cooled and cured by blowing high pressure air of a normal temperature after curing the thermosetting resin contained in the reinforced fibers through heating. Here, the high pressure hydrogen tank is obtained through the cooling and curing.

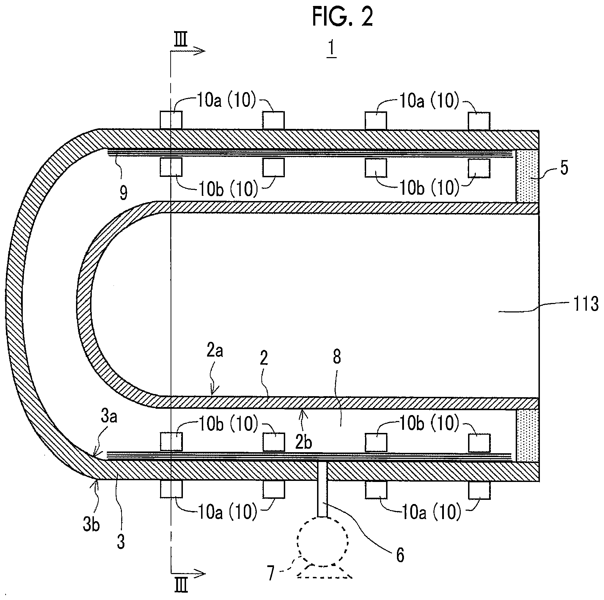

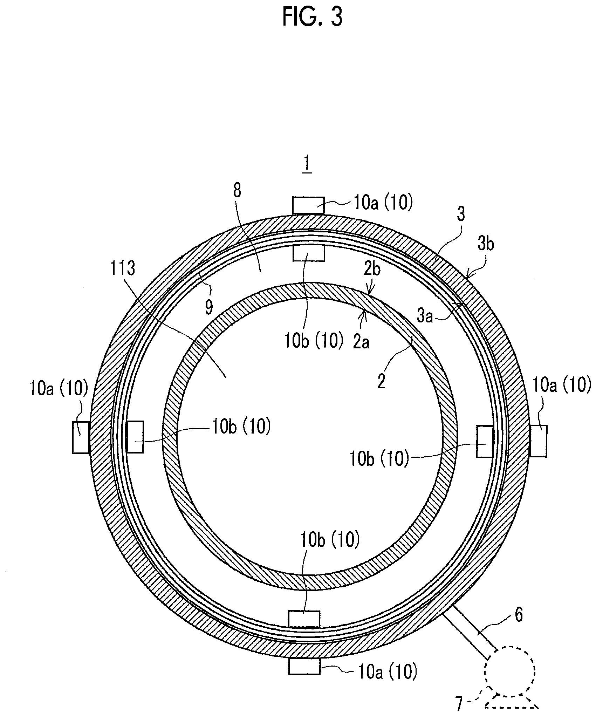

Next, a configuration of the vacuum heat insulation structure 1 will be described with reference to FIG. 2 and FIG. 3. FIG. 2 is a schematic view for describing a configuration of the vacuum heat insulation structure 1. FIG. 3 is a cross-sectional view taken along line III-III of FIG. 2. As shown in FIG. 2 and FIG. 3, the vacuum heat insulation structure 1 has an inner cylinder 2 serving as an inner wall, and an outer cylinder 3 serving as an outer wall formed to cover the inner cylinder 2. The heating space 113 is covered with the inner cylinder 2. That is, an inner surface 2a of the inner cylinder 2 comes in contact with the heating space 113. The inner cylinder 2 and the outer cylinder 3 have bottoms. Materials of the inner cylinder 2 and the outer cylinder 3 are, for example, stainless steel, iron and steel. In addition, an annular sealing member 5 (see FIG. 2) is disposed in an opening portion in a space between the inner cylinder 2 and the outer cylinder 3. Accordingly, the space between the inner cylinder 2 and the outer cylinder 3 is sealed. Further, the sealing member 5 is formed of a material having low thermal conductivity, for example, Teflon (Registered Trademark), which is polytetrafluoroethylene consisting of only fluorine and carbon.

An exhaust port 6 configured to connect a vacuum pump such as a rotary pump or the like is installed at a side surface of the outer cylinder 3. Since the vacuum pump is connected to the exhaust port 6 to provide a vacuum in the space sealed between the inner cylinder 2 and the outer cylinder 3, a vacuum space 8 is formed between the inner cylinder 2 and the outer cylinder 3.

A reflective film 9 configured to prevent transfer of radiant heat from the inner cylinder 2 to the outer cylinder 3 is disposed in the vacuum space 8 between the inner cylinder 2 and the outer cylinder 3. In the vacuum space 8, the reflective film 9 is fixed to an inner surface 3a of the outer cylinder 3 by a fixing tool 10 so as not to come in contact with an outer surface 2b of the inner cylinder 2.

The fixing tool 10 is, specifically, a magnet pair constituted by a first magnet 10a disposed on an outer surface 3b of the outer cylinder 3 and a second magnet 10b disposed in the vacuum space 8 and facing the first magnet 10a with the outer cylinder 3 sandwiched between the first magnet 10a and the second magnet 10b. That is, the reflective film 9 is sandwiched between the first magnet 10a and the second magnet 10b and fixed to the inner surface 3a of the outer cylinder 3. Further, when the material of the outer cylinder 3 is a magnetic metal such as iron and steel or the like, since the first magnet 10a attracts the outer cylinder 3 so that the reflective film 9 is fixed to the inner surface 3a of the outer cylinder 3, the second magnet 10b is not required.

The reflective film 9 is a multi-layered film in which a metal thin film and a heat resistant thin film are alternately laminated in a cylindrical shape. The metal thin film is a thin film formed of a material having a high reflection coefficient such as aluminum, copper, titanium, silver, alumina, or the like. The heat resistant thin film is a thin film formed of a material having good thermal resistance, for example, a ceramic thin film.

The reflective film 9 is fixed to the inner surface 3a of the outer cylinder 3 by the fixing tool 10 so as not to come in contact with the outer surface 2b of the inner cylinder 2. For this reason, even when the inner cylinder 2 that covers the heating space 113 has a high temperature, heat of the inner cylinder 2 is not transferred to the outer cylinder 3 via the reflective film 9. Accordingly, the vacuum heat insulation structure 1 obtains sufficient thermal insulation performance even when the inner cylinder 2 serving as an inner wall has a high temperature. In addition, since the reflective film 9 does not come in contact with the inner cylinder 2 having a high temperature, the temperature of the reflective film 9 can be suppressed from becoming a high temperature. For this reason, even when the inner cylinder 2 is heated to a temperature of about 800 °C, aluminum having a relatively low melting point may be used as a material of the reflective film 9.

Here, a method of manufacturing the vacuum heat insulation structure 1 will be schematically described with reference to FIG. 2. First, the reflective film 9 is inserted into the outer cylinder 3. Next, the reflective film 9 is fixed to the inner surface 3a of the outer cylinder 3 by the fixing tool 10. Next, the inner cylinder 2 is inserted into the outer cylinder 3 to which the reflective film 9 is fixed. Next, an opening portion of the space between the inner cylinder 2 and the outer cylinder 3 is sealed by the sealing member 5. Then, a vacuum pump 7 is connected to the exhaust port 6 to provide a vacuum in the space sealed between the inner cylinder 2 and the outer cylinder 3.

As described above, since the reflective film 9 is fixed to the inner surface 3a of the outer cylinder 3, when the inner cylinder 2 is inserted into the outer cylinder 3, it is possible to decrease the possibility of damaging the reflective film 9 due to the collision of the outer surface 2b of the inner cylinder 2 with the reflective film 9. Accordingly, in comparison with the case in which the reflective film 9 is not fixed to the inner surface 3a of the outer cylinder 3, the vacuum heat insulation structure 1 can be easily manufactured.

### [Modified Example 1]

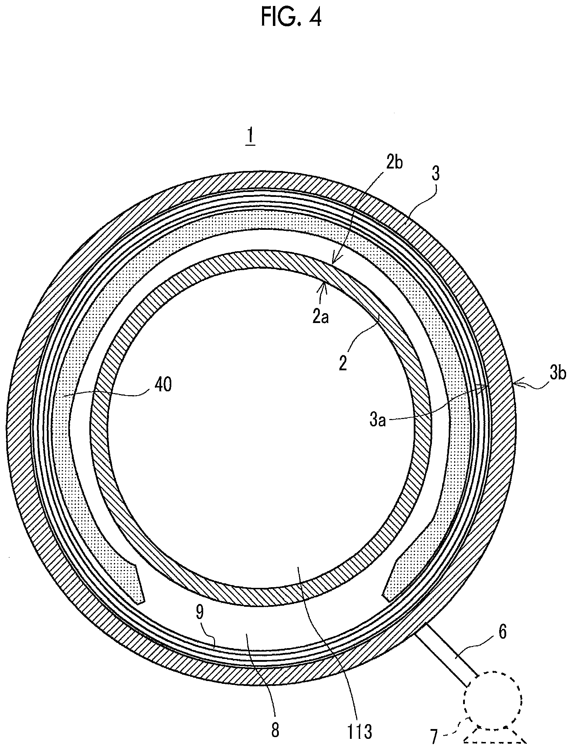

FIG. 4 is a schematic view showing a state in which a fixing tool 40 according to Modified Example 1 is disposed in the vacuum heat insulation structure 1. As shown in FIG. 4, the fixing tool 40 is a C-ring that biases the reflective film 9 to the inner surface 3a of the outer cylinder 3. In the vacuum heat insulation structure 1, since the inner wall is the inner cylinder 2 formed in a cylindrical shape and the outer wall is the outer cylinder 3 formed in the cylindrical shape, the fixing tool 40 can be disposed in the space sealed between the inner cylinder 2 and the outer cylinder 3. A position at which the fixing tool 40 is disposed in a longitudinal direction of the outer cylinder 3 is the same as a position at which the fixing tool 10 is disposed in the longitudinal direction of the outer cylinder 3 shown in FIG. 2. A material of the C-ring serving as the fixing tool 40 is, for example, spring steel. The fixing tool 40 is inserted into the outer cylinder 3 in a state in which a diameter of the fixing tool 40 is reduced, and expanded outward in the radial direction by an elastic restoring force after insertion such that the reflective film 9 is biased to the inner surface 3a of the outer cylinder 3. The reflective film 9 can be fixed to the inner surface 3a of the outer cylinder 3 so as not to come in contact with the outer surface 2b of the inner cylinder 2 by the fixing tool 40 configured as described above.

### [Modified Example 2]

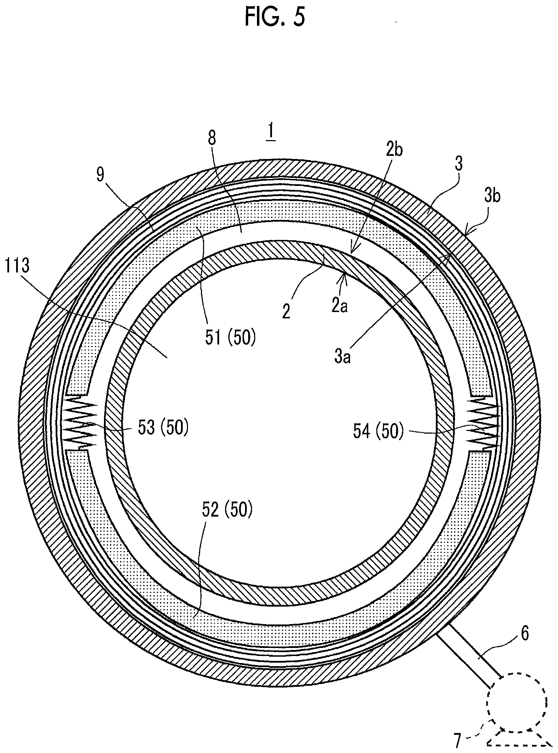

FIG. 5 is a schematic view showing a state in which a fixing tool 50 according to Modified Example 2 is disposed in the vacuum heat insulation structure 1. As shown in FIG. 5, the fixing tool 50 is an O-ring configured by connecting end portions of a pair of semicircular arc-shaped rings 51 and 52 to each other using springs 53 and 54. In the vacuum heat insulation structure 1, since the inner wall is the inner cylinder 2 formed in a cylindrical shape and the outer wall is the outer cylinder 3 formed in a cylindrical shape, the fixing tool 50 can be disposed in the space sealed between the inner cylinder 2 and the outer cylinder 3. A position at which the fixing tool 50 is disposed in the longitudinal direction of the outer cylinder 3 is the same as the position at which the fixing tool 10 is disposed in the longitudinal direction of the outer cylinder 3 shown in FIG. 2. An O-ring serving as the fixing tool 50 is inserted into the outer cylinder 3 in a state in which the springs 53 and 54 are contracted to reduce diameters thereof, and expanded outward in the radial direction by elastic restoring forces of the springs 53 and 54 after insertion such that the reflective film 9 is biased to the inner surface 3a of the outer cylinder 3. The reflective film 9 can be fixed to the inner surface 3a of the outer cylinder 3 by the fixing tool 50 configured as above so as not to come in contact with the outer surface 2b of the inner cylinder 2.

### [Modified Example 3]

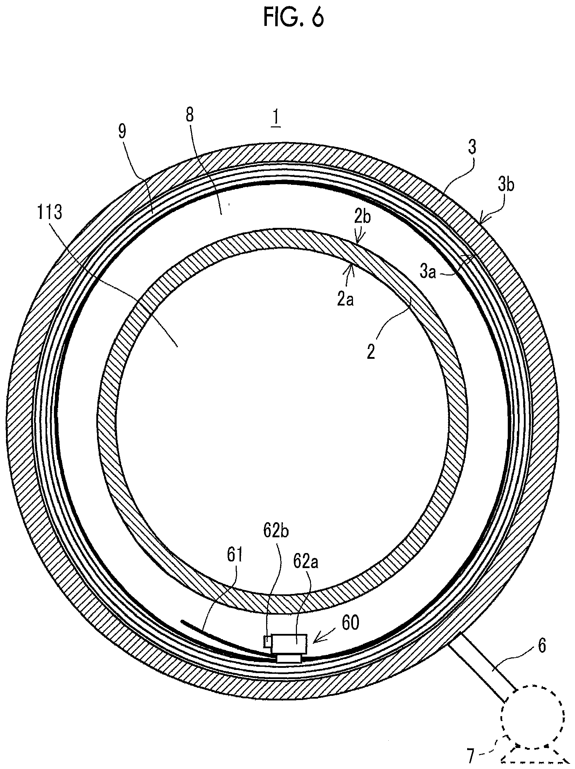

FIG. 6 is a schematic view showing a state in which a fixing tool 60 according to Modified Example 3 is disposed in the vacuum heat insulation structure 1. As shown in FIG. 6, the fixing tool 60 is an O-ring having a structure similar to a general hose clip. That is, the fixing tool 60 has a belt-shaped strap 61 rounded in an O shape, and an adjustment mechanism 62 attached to an inner circumferential side of one end of the strap 61 and configured to adjust an effective length of the strap 61. In the vacuum heat insulation structure 1, since the inner wall is the inner cylinder 2 formed in a cylindrical shape and the outer wall is the outer cylinder 3 formed in a cylindrical shape, the fixing tool 60 can be disposed in the space sealed between the inner cylinder 2 and the outer cylinder 3. The adjustment mechanism 62 is constituted by a casing 62a and a bolt 62b. An adjacent tooth shape for engaging with a screw thread of the bolt 62b is formed on an inner circumferential surface of the strap 61. An effective length of the strap 61 can be adjusted by rotating the bolt 62b, and thus, an outer diameter of the fixing tool 60 can be adjusted. For example, the outer diameter of the fixing tool 60 is reduced by reducing the effective length of the strap 61 when the bolt 62b is rotated clockwise, and the outer diameter of the fixing tool 60 is increased by increasing the effective length of the strap 61 when the bolt 62b is rotated counterclockwise. A position at which the fixing tool 60 is disposed in the longitudinal direction of the outer cylinder 3 is the same as the position at which the fixing tool 10 is disposed in the longitudinal direction of the outer cylinder 3 shown in FIG. 2. The fixing tool 60 is inserted into the outer cylinder 3 in a state in which the outer diameter is reduced, and the outer diameter is increased to bias the reflective film 9 to the inner surface 3a of the outer cylinder 3 by rotating the bolt 62b after insertion. The reflective film 9 can be fixed to the inner surface 3a of the outer cylinder 3 by the fixing tool 60 configured as above so as not to come in contact with the outer surface 2b of the inner cylinder 2.

Further, the present invention is not limited to the embodiments and may be appropriately modified without departing from the spirit of the present claims. In the embodiments, when the structures shown in Modified Examples 1 to 3 are used as the fixing tools, while shapes of the inner wall and the outer wall need to be cylindrical, and for example, when the above-mentioned magnet pair is used as the fixing tool, or the like, the shapes of the inner wall and the outer wall need not be cylindrical and, for example, may be rectangular.

For example, the vacuum heat insulation structure may be a cylinder having an inner wall and an outer wall, both sides of which are open, and a space between the inner wall and the outer wall may be sealed by sealing members in opening portions of both sides.

## Claims

1. A vacuum heat insulation structure (1) for a heating furnace (100), the vacuum heat insulation structure (1) comprising:
a heating space (113) covered by an inner wall (2);
an outer wall (3) configured to cover the inner wall (2);
a vacuum space (8) formed between the inner wall (2) and the outer wall (3);
a reflective film (9) disposed in the vacuum space (8) and configured to prevent transfer of radiant heat from the inner wall (2) to the outer wall (3) in the vacuum space (8);
**characterised by** a fixing tool (10; 40; 50; 60) configured to fix the reflective film (9) to an inner surface (3a) of the outer wall (3) so as not to come in contact with an outer surface (2b) of the inner wall (2);
wherein the fixing tool (10; 40; 50; 60) is configured to bias the reflective film (9) to the inner surface of the outer wall (3).

2. The vacuum heat insulation structure (1) according to claim 1, wherein the fixing tool (10) is a magnet pair including a first magnet (10a) disposed on an outer surface (3b) of the outer wall (3) and a second magnet (10b) disposed in the vacuum space (8) and facing the first magnet (10a) with the outer wall (3) sandwiched between the first magnet (10a) and the second magnet (10b), and
the reflective film (9) is sandwiched between the first magnet (10a) and the second magnet (10b) and fixed to the inner surface (3a) of the outer wall (3).

3. The vacuum heat insulation structure (1) according to claim 1, wherein the inner wall (2) and the outer wall (3) are formed in a cylindrical shape, and
the fixing tool (40) is a C-ring.

4. The vacuum heat insulation structure (1) according to claim 1, wherein the fixing tool (50) is an O-ring configured by connecting end portions of a pair of semicircular arc-shaped rings (51, 52) to each other using springs (53, 54).

5. The vacuum heat insulation structure (1) according to claim 1, wherein the fixing tool (60) has a belt-shaped strap (61) rounded in an O shape, and an adjustment mechanism (62) attached to an inner circumferential side of one end of the strap (61) and configured to adjust an effective length of the strap (61).

6. The vacuum heat insulation structure (1) according to claim 1, wherein a material of the outer wall (3) is a magnetic metal,
the fixing tool (10) is a first magnet (10a) disposed on an outer surface (3b) of the outer wall (3), and
the reflective film (9) is fixed to the inner surface (3a) of the outer wall (3) as the first magnet (10a) attracts the outer wall (3).

7. The vacuum heat insulation structure (1) according to any one of claims 1 to 6, wherein the reflective film (9) includes aluminum.

8. The vacuum heat insulation structure (1) according to any one of claims 1 to 7, wherein the reflective film (9) is a multi-layered film in which a metal thin film and a heat resistant thin film are alternately laminated in a cylindrical shape.

9. The vacuum heat insulation structure (1) according to claim 8, wherein the metal thin film includes aluminum, and the heat resistant thin film is a ceramic thin film.

## Patentansprüche

1. Vakuum-Wärmeisolierstruktur (1) für einen Wärmeofen (100), wobei die Vakuum-Wärmeisolierstruktur (1) Folgendes umfasst:
einen Wärmeraum (113), der durch eine Innenwand (2) abgedeckt ist;
eine Außenwand (3), die konfiguriert ist, die Innenwand (2) abzudecken;
einen Vakuumraum (8), der zwischen der Innenwand (2) und der Außenwand (3) gebildet ist;
einen reflektierenden Film (9), der in dem Vakuumraum (8) angeordnet ist und konfiguriert ist, eine Übertragung von Strahlungswärme von der Innenwand (2) zu der Außenwand (3) in dem Vakuumraum (8) zu verhindern;
**gekennzeichnet durch** ein Fixierwerkzeug (10; 40; 50; 60), das konfiguriert ist, den reflektierenden Film (9) an einer Innenfläche (3a) der Außenwand (3) zu fixieren, um nicht in Kontakt mit einer Außenfläche (2b) der Innenwand (2) zu kommen;
wobei das Fixierwerkzeug (10; 40; 50; 60) konfiguriert ist, den reflektierenden Film (9) zu der Innenfläche der Außenwand (3) vorzuspannen.

2. Vakuum-Wärmeisolierstruktur (1) nach Anspruch 1, wobei das Fixierwerkzeug (10) ein Magnetpaar ist, das einen ersten Magneten (10a), der an einer Außenfläche (3b) der Außenwand (3) angeordnet ist, und einen zweiten Magneten (10b), der in dem Vakuumraum (8) angeordnet ist und dem ersten Magneten (10a) zugewandt ist, wobei die Außenwand (3) sandwichartig zwischen dem ersten Magneten (10a) und dem zweiten Magneten (10b) eingefügt ist, beinhaltet und
der reflektierende Film (9) sandwichartig zwischen dem ersten Magneten (10a) und dem zweiten Magneten (10b) eingefügt ist und an der Innenfläche (3a) der Außenwand (3) fixiert ist.

3. Vakuum-Wärmeisolierstruktur (1) nach Anspruch 1, wobei die Innenwand (2) und die Außenwand (3) in einer zylindrischen Form gebildet sind und
das Fixierwerkzeug (40) ein C-Ring ist.

4. Vakuum-Wärmeisolierstruktur (1) nach Anspruch 1, wobei das Fixierwerkzeug (50) ein O-Ring ist, der durch Verbinden von Endabschnitten eines Paars halbkreisförmiger bogenförmiger Ringe (51, 52) unter Verwendung von Federn (53, 54) miteinander konfiguriert ist.

5. Vakuum-Wärmeisolierstruktur (1) nach Anspruch 1, wobei das Fixierwerkzeug (60) einen bandförmigen Riemen (61), der in einer O-Form abgerundet ist, und einen Einstellmechanismus (62), der auf einer Innenumfangsseite von einem Ende des Riemens (61) angebracht ist, aufweist und konfiguriert ist, eine effektive Länge des Riemens (61) einzustellen.

6. Vakuum-Wärmeisolierstruktur (1) nach Anspruch 1, wobei ein Material der Außenwand (3) ein magnetisches Metall ist,
das Fixierwerkzeug (10) ein erster Magnet ist (10a), der an einer Außenfläche (3b) der Außenwand (3) angeordnet ist, und
der reflektierende Film (9) an der Innenfläche (3a) der Außenwand (3) fixiert wird, wenn der erste Magnet (10a) die Außenwand (3) anzieht.

7. Vakuum-Wärmeisolierstruktur (1) nach einem der Ansprüche 1 bis 6, wobei der reflektierende Film (9) Aluminium beinhaltet.

8. Vakuum-Wärmeisolierstruktur (1) nach einem der Ansprüche 1 bis 7, wobei der reflektierende Film (9) ein mehrschichtiger Film ist, in dem ein Metalldünnfilm und ein wärmebeständiger Dünnfilm abwechselnd in einer zylindrischen Form laminiert sind.

9. Vakuum-Wärmeisolierstruktur (1) nach Anspruch 8, wobei der Metalldünnfilm Aluminium beinhaltet und der wärmebeständige Dünnfilm ein keramischer Dünnfilm ist.

## Revendications

1. Structure d'isolation thermique sous vide (1) pour un four de chauffage (100), la structure d'isolation thermique sous vide (1) comprenant :
un espace de chauffage (113) recouvert par une paroi intérieure (2) ;
une paroi extérieure (3) conçue pour recouvrir la paroi intérieure (2) ;
un espace sous vide (8) formé entre la paroi intérieure (2) et la paroi extérieure (3) ;
un film réfléchissant (9) disposé dans l'espace sous vide (8) et conçu pour empêcher le transfert de chaleur rayonnante de la paroi intérieure (2) vers la paroi extérieure (3) dans l'espace sous vide (8) ;
**caractérisée par** un outil de fixation (10 ; 40 ; 50 ; 60) conçu pour fixer le film réfléchissant (9) à une surface intérieure (3a) de la paroi extérieure (3) de manière à ne pas venir en contact avec une surface extérieure (2b) de la paroi intérieure (2) ;
l'outil de fixation (10 ; 40 ; 50 ; 60) étant conçu pour solliciter le film réfléchissant (9) vers la surface intérieure de la paroi extérieure (3).

2. Structure d'isolation thermique sous vide (1) selon la revendication 1, dans laquelle l'outil de fixation (10) est une paire d'aimants comprenant un premier aimant (10a) disposé sur une surface extérieure (3b) de la paroi extérieure (3) et un deuxième aimant (10b) disposé dans l'espace sous vide (8) et faisant face au premier aimant (10a) avec la paroi extérieure (3) prise en sandwich entre le premier aimant (10a) et le deuxième aimant (10b), et
le film réfléchissant (9) est pris en sandwich entre le premier aimant (10a) et le deuxième aimant (10b) et fixé à la surface intérieure (3a) de la paroi extérieure (3).

3. Structure d'isolation thermique sous vide (1) selon la revendication 1, dans laquelle la paroi intérieure (2) et la paroi extérieure (3) sont de forme cylindrique, et
l'outil de fixation (40) est un anneau en forme de C.

4. Structure d'isolation thermique sous vide (1) selon la revendication 1, dans laquelle l'outil de fixation (50) est un anneau en forme de O formé par le raccordement entre elles des parties d'extrémité d'une paire d'anneaux semi-circulaires en forme d'arc (51, 52) à l'aide de ressorts (53, 54).

5. Structure d'isolation thermique sous vide (1) selon la revendication 1, dans laquelle l'outil de fixation (60) comporte une bande en forme de courroie (61) arrondie en forme de O et un mécanisme de réglage (62) attaché à un côté circonférentiel intérieur d'une extrémité de la bande (61) et conçu pour régler une longueur efficace de la bande (61).

6. Structure d'isolation thermique sous vide (1) selon la revendication 1, dans laquelle un matériau de la paroi extérieure (3) est un métal magnétique,
l'outil de fixation (10) est un premier aimant (10a) disposé sur une surface extérieure (3b) de la paroi extérieure (3), et
le film réfléchissant (9) est fixé à la surface intérieure (3a) de la paroi extérieure (3) tandis que le premier aimant (10a) attire la paroi extérieure (3).

7. Structure d'isolation thermique sous vide (1) selon l'une quelconque des revendications 1 à 6, dans lequel le film réfléchissant (9) comprend de l'aluminium.

8. Structure d'isolation thermique sous vide (1) selon l'une quelconque des revendications 1 à 7, dans laquelle le film réfléchissant (9) est un film multicouche dans lequel un film mince métallique et un film mince résistant à la chaleur sont stratifiés en alternance dans une forme cylindrique.

9. Structure d'isolation thermique sous vide (1) selon la revendication 8, dans laquelle le film mince métallique comprend de l'aluminium et le film mince résistant à la chaleur est un film mince céramique.
